# EUROPÄISCHE PATENTANMELDUNG

(11) **EP 2 105 108 A1**
(43) Veröffentlichungstag der Anmeldung: **30.09.2009**
(21) Anmeldenummer: 08005555.1
(22) Anmeldetag: 26.03.2008
(51) Int. Cl.: A61C 1/00, A61C 1/18

(54) **Dentaler Laserhandgriff und dentale Behandlungseinheit mit einem derartigen Laserhandgriff**

(71) Anmelder: W & H Dentalwerk Bürmoos GmbH, 5111 Bürmoos (AT)
(72) Erfinder: Irran, Thomas, 5020 Salzburg (AT); Rauchenzauner, Stephan, Singapure 59674 (SG); Hörmann, Udo, 5411 Oberalm (AT)

(57) **Zusammenfassung**

Es ist ein dentaler Laserhandgriff (1, 3, 5) offenbart, der eine Außenhülse (11, 31, 51) mit einem Hohlraum (52), eine in dem Hohlraum (52) angeordnete Laserlichtquelle (59), die insbesondere eine Laserdiode aufweist, eine Lichtabgabevorrichtung (12A, 12B) zur Abgabe des von der Laserlichtquelle (59) erzeugten Laserlichts in Richtung der Präparationsstelle und eine Anschlussvorrichtung (13, 33, 53) zur Verbindung des Laserhandgriffs (1, 3, 5) mit einer Versorgungsleitung (19) umfasst, wobei die Anschlussvorrichtung (13, 33, 53) ein erstes Kupplungselement (14, 34, 54) aufweist, das zumindest drei Medienanschlüsse (20-25, 40-44, 60, 61) umfasst, die derart am ersten Kupplungselement (14, 34, 54) angeordnet sind, dass das erste Kupplungselement (14, 34, 54) lösbar mit einem zweiten Kupplungselement (15) der Versorgungsleitung (19) verbindbar ist, wobei das zweite Kupplungselement (15) zum Anschluss an ein dentales Handinstrument ohne Laserlichtquelle (59) vorgesehen ist. Durch diese Ausgestaltung des dentalen Laserhandgriffs (1, 3, 5) bzw. der dentalen Behandlungseinheit (10) ist es möglich, den Laserhandgriff (1, 3, 5) mittels der von der dentalen Behandlungseinheit (10) zur Verfügung gestellten Medienversorgung zu betreiben.

## Beschreibung

Die vorliegende Erfindung betrifft einen dentalen Laserhandgriff gemäß dem Oberbegriff des Anspruchs 1 und eine dentale Behandlungseinheit mit einem derartigen Laserhandgriff.

Aus dem Stand der Technik sind zwei Ausführungsformen für dentale Laserbehandlungseinrichtungen bekannt: Bei der ersten Ausführungsform, die zum Beispiel in dem Patent US 4,940,411 beschrieben ist, ist die Laserlichtquelle über einen Lichtleiter mit dem Laserhandstück zur Abgabe der Laserstrahlung auf die Präparationsstelle verbunden. Um die Verwendung des Lichtleiters, zum Beispiel optischer Fasern oder eines Gelenkarms, zu vermeiden, ist gemäß der zweiten Ausführungsform die Laserlichtquelle im oder am Laserhandstück angeordnet, siehe zum Beispiel die Patentanmeldung EP 780 097 A2. Bei beiden Ausführungsformen erfolgt die Versorgung des Laserhandstücks mit Medien, zum Beispiel mit Luft, Wasser oder gegebenenfalls Strom, über einen Versorgungsschlauch, der mit den entsprechenden Medienquellen verbunden ist.

Der Nachteil beider Ausführungsformen der dentalen Laserbehandlungseinrichtungen ist, dass sie in einer Dentalpraxis als separate Behandlungseinheiten nicht oder nur schlecht in das dentale Arbeitsumfeld des Zahnarztes integriert sind. Das Zentrum der Dentalpraxis ist durch den Behandlungsplatz gebildet, d.h. durch die dentale Behandlungseinheit mit dem Patientenstuhl, um den in ergonomisch vorteilhafter Weise der Arbeitsplatz des Zahnarztes und gegebenenfalls seines Assistenten sowie die jeweils von ihnen verwendeten Geräte angeordnet sind. Die Geräte, insbesondere jene Geräte, die an der dentalen Behandlungseinheit selbst vorgesehen sind, zum Beispiel Motore oder Handstücke, sind derart angeordnet, dass sie vom Arbeitsplatz des Zahnarztes oder dessen Assistenten einfach handhabbar in Richtung des Patienten bzw. von diesem weg führbar sind, so dass ein möglichst bedienungsfreundliches und ergonomisch vorteilhaftes Arbeitsumfeld geschaffen ist. Die dentalen Laserbehandlungseinrichtungen mit ihren separaten Steuergeräten, Medienanschlüssen und Versorgungseinrichtungen sind in dieses Umfeld nur schlecht integrierbar, so dass sie oft hilfsweise neben dem Behandlungsplatz und damit meist schlecht greifbar oder bedienbar positioniert werden.

Der vorliegenden Erfindung liegt daher die Aufgabe zugrunde für den Zahnarzt eine ergonomisch verbesserte und handhabungsfreundlichere Möglichkeit zum Einsatz von dentalen Laserbehandlungsgeräten zu schaffen.

Gemäß einem Ausführungsbeispiel wird diese Aufgabe durch einen dentalen Laserhandgriff gelöst, der eine Außenhülse mit einem Hohlraum, eine in dem Hohlraum angeordneten Laserlichtquelle, die insbesondere eine Laserdiode aufweist, eine Lichtabgabevorrichtung zur Abgabe des von der Laserlichtquelle erzeugten Laserlichts in Richtung der Präparationsstelle und eine Anschlussvorrichtung zur Verbindung des Laserhandgriffs mit einer Versorgungsleitung umfasst. Die Anschlussvorrichtung weist ein erstes Kupplungselement auf, das zumindest drei Medienanschlüsse umfasst, die derart am ersten Kupplungselement angeordnet sind, dass das erste Kupplungselement lösbar mit einem zweiten Kupplungselement der Versorgungsleitung verbindbar ist, wobei das zweite Kupplungselement zum Anschluss an ein dentales Handinstrument ohne Laserlichtquelle vorgesehen ist.

Es ist somit eine dentale Laserbehandlungsvorrichtung geschaffen, die den oben beschriebenen dentalen Laserhandgriff sowie das zweite Kupplungselement, das zum Anschluss an ein dentales Handinstrument ohne Laserlichtquelle vorgesehen ist und das mit der dentalen Behandlungseinheit, d.h. dem Behandlungsplatz, verbunden ist, umfasst. Aufgrund dieser Ausgestaltung des dentalen Laserhandgriffs bzw. der dentalen Laserbehandlungsvorrichtung ist es möglich, den Laserhandgriff mittels der von der dentalen Behandlungseinheit zur Verfügung gestellten Medienversorgung zu betreiben. Zum Durchführen einer dentalen Laserbehandlung genügt es somit, den dentalen Laserhandgriff über die Anschlussvorrichtung mit der Versorgungsleitung der dentalen Behandlungseinheit zu verbinden, so dass für den Betrieb des Laserhandgriffs notwendigen Medien, insbesondere elektrischer Strom und zumindest ein Fluid, dem dentalen Laserhandgriff von der dentalen Behandlungseinheit über den Versorgungsschlauch und das zweite Kupplungselement zuführbar sind. Der dentale Laserhandgriff ist somit ein Teil der dentalen Behandlungseinheit und für den Zahnarzt leichter zugänglich und besser zu handhaben.

Der Begriff Laserhandgriff umfasst sowohl gerade Handgriffe oder Handstücke, als auch gebogene Handgriffe oder Handstücke, die im Dentalbereich oftmals als Winkelstücke bezeichnet werden. Der Laserhandgriff und insbesondere dessen Außenhülse können einteilig ausgebildet sein. Alternativ bestehen sie aus mehreren Teilen, die voneinander lösbar sind, so dass zum Beispiel unterschiedliche Kopfteile an den Griffteil des Laserhandgriffs anfügbar sind oder dass der Laserhandgriff in einen ersten Abschnitt mit der Laserlichtquelle und einen zweiten Abschnitt trennbar ist.

Der Hohlraum zur Aufnahme der Laserlichtquelle erstreckt sich bevorzugt durch den gesamten, länglich oder rohrförmig geformten Laserhandgriff von der Anschlussvorrichtung bis zur Laserlichtabstrahlöffnung, die bevorzugt an dem der Anschlussvorrichtung gegenüberliegenden Ende des Laserhandgriffs vorgesehen ist. Der bevorzugt zylindrisch geformte Hohlraum dient somit nicht nur zur Aufnahme der Laserlichtquelle, sondern auch anderer Bauteile des Laserhandgriffs, zum Beispiel einer Steuervorrichtung, eines Lichtleiters, optischer Elemente wie Linsen, Spiegel, Shutter etc. oder Medienleitungen für Kühlfluide, die gegebenenfalls mit Düsen, Ventilen, Mischkammern u.ä. versehen sind.

Als Laserlichtquelle kann grundsätzlich jeder bekannte Laserstrahlung erzeugende Einheit verwendet werden, zum Beispiel Erbium-Laserlichtquellen (Er:YAG) oder Neodym-Laserlichtquellen (Nd:YAG). Bevorzugt umfasst die Laserlichtquelle zumindest eine Laserdiode, die eine für eine dentale Behandlung ausreichende Leistung bei einer gleichzeitig geringen Wärmeentwicklung aufweist. Zur Verwendung der Laserdiode sind, bevorzugt im Laserhandgriff, elektrische oder elektronische Komponenten zur Transformierung von Stromparametern des von der dentalen Behandlungseinheit zur Verfügung gestellten Stroms nötig, zum Beispiel Kondensatoren, SMD-Widerstände oder ein Mlkrocontroller.

Die Lichtabgabevorrichtung des dentalen Laserhandgriffs umfasst zum Beispiel eine Öffnung in der Außenhülse des Laserhandgriffs, eine in diese Öffnung lösbar einsetzbare Fasersonde (fiber-tip), einen oder mehrere Lichtleiter oder Lichtleitfasern, eine Bohrung zur Durchführung des Laserlichtstrahls als Freistrahl, eine oder mehrere optische Linsen, oder einen oder mehrere optische Spiegel, insbesondere einen elliptischen Spiegel.

Die Medienanschlüsse des ersten Kupplungselements sind zum Beispiel als das Kupplungselement durchsetzende Kanäle, Leitungen, Rohre oder Bohrungen, als elektrische Kontakte, zum Beispiel als elektrisch leitende Stifte, Feder- oder Plankontakte, und / oder als elektrische Leitungen ausgebildet. Diese Medienanschlüsse des ersten Kupplungselements sind derart ausgebildet, zum Beispiel in ihrer Form, ihrem Durchmesser oder ihrer Größe, dass sie mit den Medienanschlüssen des zweiten Kupplungselements verbindbar sind. In entsprechender Weise sind sie an denselben Stellen angeordnet wie die komplementären Medienanschlüsse des zweiten Kupplungselements, so dass beide Kupplungselemente das gleiche, spiegelverkehrte Anschlussbild aufweisen und mit einander verbindbar sind, insbesondere durch eine Steckkupplung miteinander kuppelbar. Die Medienanschlüsse des zweiten Kupplungselements sind zum Beispiel als das Kupplungselement durchsetzende Kanäle, Leitungen, Rohre oder Bohrungen, als elektrische Kontakte, zum Beispiel als elektrisch leitende Stifte, Feder- oder Plankontakte, und / oder als elektrische Leitungen ausgebildet.

Das zweite Kupplungselement ist bevorzugt zum Anschluss eines druckluftbetriebenen, ein Laufrad umfassenden dentalen Handstücks vorgesehen. Selbstverständlich kann das zweite Kupplungselement jedoch auch zum Anschluss anderer dentaler Instrumente vorgesehen sein, zum Beispiel eines Elektromotors, eines mittels eines Motors betriebenen Handstücks, eines Zahnsteinentfernungshandstücks, eines Funktions-oder Spritzhandstücks, eines Absaughandstücks oder einer Aushärtelampe.

Gemäß einem Ausführungsbeispiel weist das erste Kupplungselement zumindest vier Medienanschlüsse auf, wobei zwei Medienanschlüsse als elektrische Leiter zur Stromversorgung der Laserlichtquelle ausgebildet sind, ein Medienanschluss zum Leiten eines Fluids in den Laserhandgriff über das zweite Kupplungselement mit einer Fluidquelle verbindbar ist und ein Medienanschluss zum Leiten eines Fluids aus dem Laserhandgriff vorgesehen ist. Bevorzugt wird das Fluid, zum Beispiel Wasser oder Druckgas, zum Kühlen der Laserlichtquelle und / oder zumindest teilweise zur Abgabe auf die Präparationsstelle verwendet. Der Vorteil dieses Ausführungsbeispiel liegt darin, dass durch die Durchleitung des Fluids durch die Leitungen oder Kanäle in den beiden Kupplungselementen das Fluid konzentriert oder 'gebündelt' vorliegt, so dass es im Laserhandgriff gezielt seiner Aufgabe oder seinem Bestimmungsort zuführbar ist, zum Beispiel der Laserlichtquelle oder einem Kühlkörper. Der Medienanschluss zum Leiten des Fluids aus dem Laserhandgriff ermöglicht des Weiteren ein geordnetes Abführen des Fluids aus dem Laserhandgriff ohne störende Auswirkungen auf den Zahnarzt oder den Patienten.

Bevorzugt weist der mit der Fluidquelle verbindbare Medienanschluss einen geringeren Durchmesser auf als der Medienanschluss zum Leiten des Fluids aus dem Laserhandgriff, wobei diese beiden Fluidmedienanschlüsse paarig nebeneinander am ersten Kupplungselement angeordnet sind und wobei die beiden als elektrische Leiter ausgebildeten Medienanschlüsse ebenfalls paarig angeordnet an einer ersten Seite des Fluidmedienanschlusspaars vorgesehen sind. Die unterschiedlichen Durchmesser der beiden Fluidmedienanschlüsse begünstigen das Strömen des Fluids vom Medienanschluss, durch den das Fluid in den Laserhandgriff eintritt durch den Laserhandgriff zurück zum Medienanschluss, durch den das Fluid aus dem Laserhandgriff austritt, ohne dass für die damit verbundene Strömungsrichtungsumkehr des Fluids Leiteinrichtungen oder eine besonders große Anzahl von Leiteinrichtungen notwendig wären. Die paarige Anordnung der Medienanschlüsse erleichtert die Montage oder Fertigung der Medienanschlüsse, die zum Beispiel als ein gemeinsames elektrisches Kontaktpaar am ersten Kupplungselement verbaut werden können.

Durch das Vorsehen zumindest eines weiteren Medienanschlusses, bevorzugt zwei paarig angeordneter Medienanschlüsse, an einer zweiten Seite des Fluidmedienanschlusspaars, die der ersten Seite gegenüber liegt, wird die Möglichkeit geschaffen zumindest ein weiteres, bevorzugt sich vom ersten Fluid unterscheidendes zweites Fluid, zum Beispiel Wasser oder Druckgas, in den Laserhandgriff zu fördern. Das Vorsehen von getrennten Medienanschlüssen hat den Vorteil, dass die Medien damit vollständig getrennt voneinander durch das erste Kupplungselement und im oder durch den Laserhandgriff geführt werden können und somit zum Beispiel eine unerwünschte Vermischung der beiden Medien unterbunden wird. So kann zum Beispiel ein erster Fluidstrom zum Kühlen der Laserlichtquelle verwendet werden und ein zweiter Fluidstrom für eine andere Aufgabe vorgesehen sein, zum Beispiel zum Kühlen der Präparationsstelle. Gemäß diesem Beispiel ist das Vermischen der beiden Fluide unerwünscht, da dies zu einer Erwärmung des Fluids zum Kühlen der Präparationsstelle führen würde, wodurch die Kühlwirkung an der Präparationsstelle vermindert wäre. Bevorzugt wird das Fluid zum Kühlen der Präparationsstelle in einer Leitung, die mit dem weiteren Medienanschluss verbunden ist und sich bis zur Lichtabgabeöffnung erstreckt, geleitet.

Bevorzugt wird durch den zumindest einen weiteren Medienanschluss eine Flüssigkeit, insbesondere Wasser, geleitet. Zur Erhöhung der elektrischen Sicherheit wird daher der zumindest eine weitere Medienanschluss an einer zweiten Seite des Fluidmedienanschlusspaars angeordnet, die der ersten Seite gegenüber liegt, so dass eine räumlich möglichst weite Trennung der elektrischen Medienanschlüsse von dem Wasser führenden Medienanschluss erreicht wird. Die paarige Anordnung der beiden weiteren Medienanschlüsse erleichtert wiederum die Montage oder Fertigung der Medienanschlüsse.

Gemäß einem anderen Ausführungsbeispiel umfasst das erste Kupplungselement zwei als elektrische Leiter ausgebildete Medienanschlüsse zur Stromversorgung der Laserlichtquelle, zumindest einen Medienanschluss, der über das zweite Kupplungselement mit einer Druckgasquelle verbindbar ist, und zumindest einen Medienanschluss, der über das zweite Kupplungselement mit einer Wasserquelle verbindbar ist. Wie bereits beschrieben ermöglicht die getrennte Zufuhr unterschiedlicher Medien durch das erste Kupplungselement und insbesondere ihre getrennte Leitung durch den Laserhandgriff eine gezielte, unterschiedliche Verwendung der beiden Medien.

Gemäß einem weiteren Ausführungsbeispiel umfasst das erste Kupplungselement zumindest ein Verschlusselement zum Verschließen oder Abdichten einer am zweiten Kupplungselement vorgesehenen Medienleitung. Das Verschlusselement unterbindet die Förderung eines Mediums in den Laserhandgriff, insbesondere wenn dieses Medium im Laserhandgriff nicht benötigt oder gewünscht ist, oder verhindert eine Verbindung eines Medienanschlusses des zweiten Kupplungselements mit dem Laserhandgriff. Eine derartige unerwünschte Verbindung liegt zum Beispiel vor, wenn das zweite Kupplungselement einen Medienanschluss für oder mit einer Absaugleitung umfasst, über die zum Absaugen von Material über ein Handstück ein Unterdruck anlegbar ist. Durch das Verschlusselement ist diese Absaugleitung verschließbar, so dass am Laserhandgriff kein Unterdruck anliegt.

Gemäß einem Ausführungsbeispiel weist das erste Kupplungselement zumindest zwei weitere Medienanschlüsse auf, die als elektrische Leiter ausgebildet sind und die mit einem weiteren elektrischen Verbraucher im oder am Laserhandgriff verbunden sind, zum Beispiel einer Steuervorrichtung, einem Kühlelement, einer Anzeigevorrichtung oder eine Beleuchtungseinrichtung zur Abgabe von sichtbarem Licht. Diese zusätzlichen elektrischen Medienanschlüsse garantieren eine ausreichende, zuverlässige Stromversorgung für alle Verbraucher einschließlich der Laserlichtquelle.

Gemäß einem bevorzugten Ausführungsbeispiel ist das erste Kupplungselement als Teil einer Steckkupplung ausgebildet, das mit dem zweiten Kupplungselement der Versorgungsleitung eine Steckkupplung bildet. Durch das Zusammenstecken der beiden Kupplungselemente werden gleichzeitig auch die Medienanschlüsse der beiden Kupplungselemente bzw. die Verschlusselemente des ersten Kupplungselements mit den Medienanschlüssen des zweiten Kupplungselements miteinander verbunden.

Gemäß einem anderen Ausführungsbeispiel ist zwischen der Laserlichtquelle und der Anschlussvorrichtung zumindest ein Kühlelement zum Kühlen der Laserlichtquelle vorgesehen, wobei das Kühlelement durch ein Fluid um- und / oder durchströmbar ist, das durch einen Medienanschluss des ersten Kupplungselements in den Laserhandgriff förderbar ist. Als Kühlelement sind zum Beispiel ein Wärme leitender Kühlkörper, insbesondere ein Metallblech, ein länglicher, hohler Kühlkörper, in dessen Inneren eine verdampfbare Flüssigkeit enthalten ist (ein so genanntes Wärmerohr oder heat pipe), oder zumindest ein Peltierelement einsetzbar. Das Kühlelement ist bevorzugt direkt mit der Laserlichtquelle verbunden oder direkt daran anschließend angeordnet. Die Anordnung des Kühlelements zwischen der Laserlichtquelle und der Anschlussvorrichtung bzw. an die Anschlussvorrichtung angrenzend ermöglicht einen äußerst kurzen Fließweg des Kühlfluids aus der Anschlussvorrichtung in den dentalen Laserhandgriff und damit unmittelbar um den Kühlkörper und anschließend durch die Anschlussvorrichtung sofort wieder aus dem Laserhandgriff hinaus, so dass eine Wärmeübertragung vom Kühlfluid auf die Außenhülse des Laserhandgriffs, insbesondere auf den Griffabschnitt, noch zusätzlich unterbunden wird.

Bevorzugt ist im Hohlraum der Außenhülse des Laserhandgriffs eine Steuervorrichtung vorgesehen, die mit zumindest einem Steuer- oder Stellelement an der Außenhülse und mit der Laserlichtquelle und / oder weiteren Bauteilen des Laserhandgriffs verbunden ist, so dass zum Beispiel Betriebsparameter der Laserlichtquelle einstellbar oder Betriebsprogramme der Laserlichtquelle auswählbar sind. Damit ist eine Steuerung oder Regelung der Laserlichtquelle und gegebenenfalls der weiteren Bauteil des Laserhandgriffs, zum Beispiel einer Beleuchtungseinrichtung oder eines Ventils in einer Fluidleitung möglich, ohne dass hierfür eine Steuerleitung in der Versorgungsleitung und dem zweiten Kupplungselement der dentalen Behandlungseinheit vorzusehen ist.

Der dentale Laserhandgriff einschließlich aller beschriebenen Varianten und Ausführungsformen kann in einer Vielzahl von dentalen Behandlungsverfahren eingesetzt werden. In einem ersten, endodontischen Verfahren wird das Laserhandstück mit dem zweiten Kupplungselement und somit mit der dentalen Behandlungseinheit verbunden und Laserstrahlung in den Zahnwurzelkanal abgegeben, um das Innere des Zahnwurzelkanals zu reinigen, insbesondere um im Zahnwurzelkanal befindliche Mikroorganismen abzutöten, oder die Zahnpulpa zu entfernen.

Gemäß einem anderen prophylaktischem oder parodontischem Verfahren wird das Laserhandstück mit dem zweiten Kupplungselement und somit mit der dentalen Behandlungseinheit verbunden und Laserstrahlung in eine Zahnfleischtasche zur Reinigung der Zahnfleischtasche abgegeben, insbesondere zur Abtötung von Mikroorganismen in der Zahnfleischtasche.

Gemäß einem weiteren dental-chirurgischen Verfahren wird das Laserhandstück mit dem zweiten Kupplungselement und somit mit der dentalen Behandlungseinheit verbunden und Laserstrahlung zur chirurgischen Behandlung von dentalem Weichgewebe abgegeben, zum Beispiel zum Durchschneiden des Lippenbändchens.

Die Erfindung wird nachfolgend anhand bevorzugter Ausführungsbeispiele und Bezug nehmend auf die beigefügten Zeichnungen erläutert:
Figur 1 zeigt eine dentale Behandlungseinheit mit einem daran angeschlossenen dentalen Laserhandgriff.
Figur 2 zeigt den Laserhandgriff sowie einen Teil der damit verbundenen Versorgungsleitung der Figur 1 in einer vergrößerten Ansicht.
Figur 3 zeigt ein zweites Ausführungsbeispiel eines dentalen Laserhandgriffs, der an eine dentale Behandlungseinheit anschließbar ist.
Figur 4 zeigt eine Frontalansicht der Anschlussvorrichtung des Laserhandgriffs der Figur 2.
Figur 5 zeigt in einer Schnittdarstellung den rückwärtigen, der Versorgungsleitung zugewandten Teil eines dritten Ausführungsbeispiels eines dentalen Laserhandgriffs, der an eine dentale Behandlungseinheit anschließbar ist.

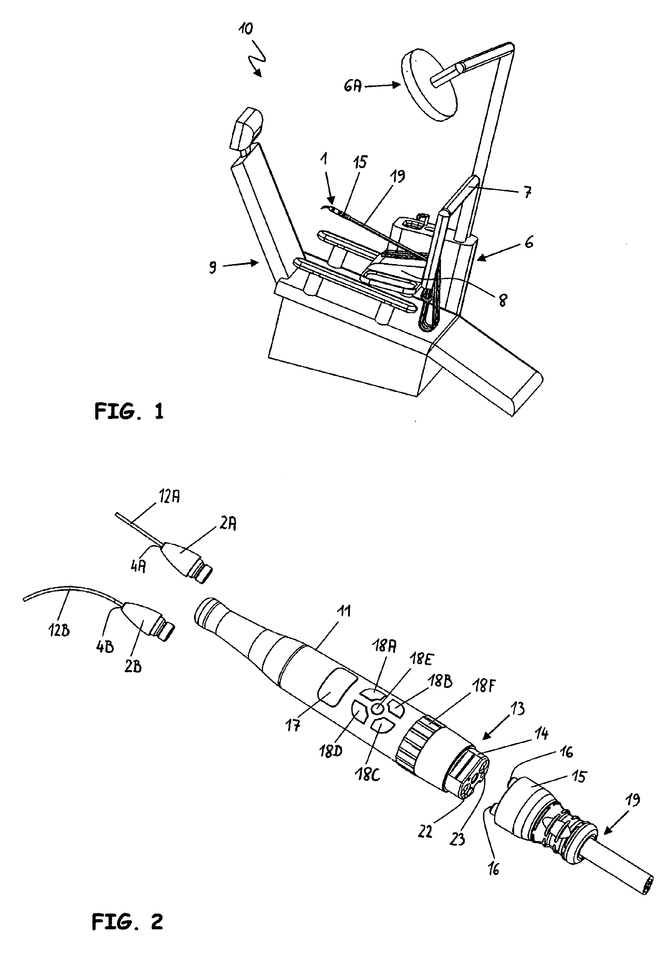

Die in Figur 1 dargestellte, vorbekannte dentale Behandlungseinheit 10 umfasst einen Stuhl 9 für den zu behandelnden Patienten, eine Handstückablage 8, die beweglich an einem Schwenkarm 7 befestigt ist, eine Versorgungseinheit 6 mit Anschlüssen an Medienquellen wie Strom, Wasser und Druckgas, insbesondere Druckluft, und einer Beleuchtungsvorrichtung 6A. An der dentalen Behandlungseinheit 10 ist des Weiteren zumindest eine Versorgungsleitung 19 vorgesehen, die mit der Versorgungseinheit 6 bzw. mit den Anschlüssen zu den Medienquellen verbunden ist und die ein Kupplungselement 15 zum Anschluss eines dentalen Handinstruments aufweist. Das anschließbare dentale Handinstrument kann zum Beispiel ein druckluftbetriebenes Handstück oder ein mittels eines Elektromotors betreibbares Handstück bzw. dentale Handinstrument oder Handstücke für chirurgische, prothetische oder prophylaktische Anwendungen umfassen. Meist sind an einer dentalen Behandlungseinheit 10 mehrere Versorgungsleitungen 19, oft vier Versorgungsleitungen 19, mit jeweils einem Kupplungselement 15 zum Anschluss unterschiedlicher, insbesondere der vorhin angeführten, Handinstrumente vorgesehen.

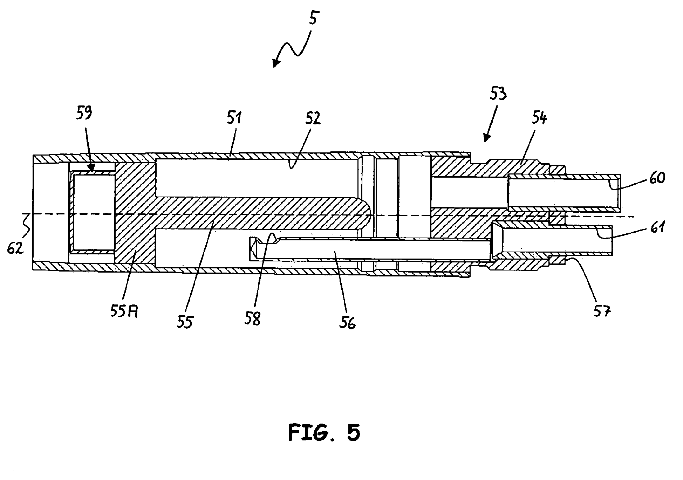

Zwecks übersichtlicherer Darstellung ist in Figur 1 nur ein einziges, über das Kupplungselement 15 mit der Versorgungsleitung 19 lösbar gekuppeltes Handinstrument abgebildet, das in Figur 2 vergrößert wiedergegeben ist. Bei dem Handinstrument handelt es sich um einen dentalen Laserhandgriff 1, der zur Abgabe von Laserstrahlung auf eine Präparationsstelle ausgebildet ist. Der Laserhandgriff 1 umfasst eine hohle, längliche, rohr-oder zylinderförmige Außenhülse 11, in deren Inneren eine Laserlichtquelle 59 (siehe Figur 5), insbesondere zumindest eine Laserdiode, aufgenommen ist. Die Außenhülse 11 weist an einem ihrer beiden Enden eine Anschlussvorrichtung 13 mit einem ersten Kupplungselement 14 auf, das lösbar mit dem zweiten Kupplungselement 15 der Versorgungsleitung 19 verbindbar ist.

An dem der Anschlussvorrichtung 13 gegenüber liegenden Ende der Außenhülse 11 sind zwei davon lösbare, auswechselbare Kopfstücke 2A, 2B vorgesehen, an deren von der Anschlussvorrichtung 13 abgewandten Ende sich jeweils eine Lichtabgabeöffnung 4A, 4B zur Abgabe der Laserlichtstrahlung befindet. Die Lichtabgabeöffnung 4A ist von einem geraden Lichtleiter 12A, die Lichtabgabeöffnung 4B ist von einem gebogenen Lichtleiter 12B durchsetzt, wobei die Lichtleiter 12A, 12B Teil der Lichtabgabevorrichtung des Laserhandgriffs 1 sind oder alternativ an die im Inneren der Außenhülse 11 vorgesehene Lichtabgabevorrichtung anschließen.

An der Außenhülle 11 des Laserhandgriffs 1 sind des Weiteren eine Anzeigevorrichtung 17 und mehrere Stell- oder Steuerelemente 18A - 18E vorgesehen. Im Inneren des Laserhandgriffs 1 ist eine Steuervorrichtung vorgesehen, die bevorzugt einen Mikrocontroller umfasst, und die mit der Anzeigevorrichtung 17 und den Stell- oder Steuerelementen 18A - 18E sowie mit Laserlichtquelle 59 verbunden ist. Über die Stell- oder Steuerelementen 18A - 18E kann der Anwender folgende Funktionen ausüben: Mittels des Steuerelements 18E, das einen Taster oder Schalter umfasst, kann der Anwender die Laserlichtquelle 59 einschalten bzw. ausschalten. Dazu weist die Steuervorrichtung eine Steuerschaltung auf, die zum Beispiel bei Betätigung des Tasters, ein Steuersignal erhält und als Reaktion auf dieses Steuersignal die Stromzufuhr zur Laserlichtquelle 59 elektronisch oder mittels eines Schalters unterbricht oder herstellt.

Das Steuerelement 18A dient zur Auswahl unterschiedlicher, voreingestellter Betriebsprogramme für verschiedene dentale Anwendungen, zum Beispiel für parodontische, endodontische, chirurgische oder prophylaktische Behandlungen. Durch Betätigen des Steuerelements 18A ruft der Anwender diese Programme auf und wählt das gewünschte Programm aus. Die Betriebsprogramme unterscheiden sich in einem oder mehreren Betriebsparametern, zum Beispiel in der von der Laserlichtquelle 59 abgegebenen Leistung, in der Betriebsart (gepulste oder kontinuierliche Laserlichtabgabe), in der Pulsweite oder Pulsdauer bei Pulsbetrieb oder in der Menge des auf die Präparationsstelle abzugebenden Kühlmittels. Die jeweiligen Werte für diese oder andere Parameter werden für jedes Betriebsprogramm auf der Anzeigevorrichtung 17, die zum Beispiel ein LCD-Display aufweist, angezeigt. Die Programme sind in einer nicht flüchtigen Speichereinheit der Steuervorrichtung, insbesondere in einem nicht überschreibbaren Speicher (ROM-Speicher), hinterlegt.

Das Steuerelement 18D dient zur Veränderung einzelner Betriebsparameter der Laserlichtquelle 59, zum Beispiel der Leistung, der Betriebsart (gepulste oder kontinuierliche Laserlichtabgabe), der Pulsweite oder der Pulsdauer bei Pulsbetrieb. Dabei können ausgehend von den in der Speichereinheit der Steuervorrichtung hinterlegten Betriebsprogrammen oder von individuellen Einstellungen einzelne oder mehrere Betriebsparameter durch den Anwender verändert werden. Die geänderten Werte werden in einer Speichereinheit in Form eines Schreib-Lese-Speichers, zum Beispiel einem RAM-Speicher, der Steuervorrichtung hinterlegt und dienen bei Betrieb des Laserhandgriffs 1 in bekannter Weise als Grenz- oder Vorgabewerte. Die ausgewählten Werte der Betriebsparameter bleiben besonders bevorzugt auch nach Ende der Behandlung bzw. nach Beendigung der Stromzufuhr automatisch oder alternativ nach Betätigung des als Speicherfunktionstasters dienenden Steuerelements 18C in der nicht volatilen Speichereinheit gespeichert, so dass der Anwender bei der nächsten Behandlung diese Parameter wieder vorfindet.

Das Stellelement 18B dient zum Ein- und Ausschalten einer Beleuchtungsvorrichtung, insbesondere eine Leuchtdiode zur Abgabe von sichtbarem Licht, des Laserhandgriffs 1 und / oder zur Variation der Beleuchtungsstärke. Dazu ist die Steuervorrichtung mit der Beleuchtungsvorrichtung verbunden und schaltet, in Abhängigkeit der vom Stellelement 18B erhaltenen Stellsignale, die Stromzufuhr zur Beleuchtungsvorrichtung elektronisch bzw. mittels eines Schalters ein oder aus bzw. verändert die Beleuchtungsstärke zum Beispiel mittels Pulsweitenmodulation.

Ein weiteres, mechanisches Stellelement 18F in Form eines Stellringes dient zur Einstellung der Durchflussmenge eines Kühlfluids, insbesondere einer Sprayflüssigkeit, die durch einen Kanal im ersten Kupplungselement 14 und durch eine mit dem Kanal verbundene Sprayleitung im Laserhandgriff 1 bis zu dessen Kopfstück 2A, 2B geleitet wird. Der Stellring 18F ist zur Veränderung der Durchflussmenge des Kühlfluids mit einem Steuerventil in der Sprayleitung verbunden.

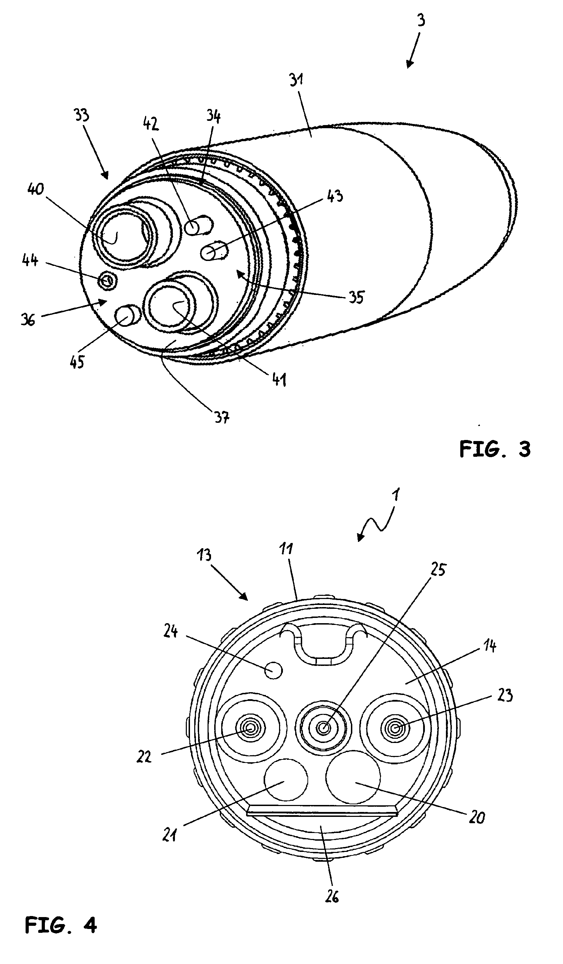

Der detaillierte Aufbau des ersten Kupplungselements 14 des Laserhandgriffs 1 ist aus Figur 4 ersichtlich. Das erste Kupplungselement 14 umfasst sechs Medienanschlüsse 20-25, die derart am ersten Kupplungselement 14 angeordnet sind, dass das erste Kupplungselement 14 lösbar mit dem zweiten Kupplungselement 15 der Versorgungsleitung 19 verbindbar ist, wobei das zweite Kupplungselement 15 ursprünglich zum Anschluss eines dentalen Handinstruments ohne Laserlichtquelle vorgesehen ist. Des Weiteren sind auch die Abmessungen der sechs Medienanschlüsse 20-25 derart bemessen, dass sie mit den Medienanschlüssen, zum Beispiel den Medienleitungen 16 des zweiten Kupplungselements 15, kompatibel sind.

Zentral auf der kreisrunden Stirnfläche 26 des ersten Kupplungselements 14 ist ein erster Medienanschluss 25 angeordnet, der eine Eintrittsöffnung und eine Bohrung umfasst und der über das zweite Kupplungselement 15 mit einer Fluidquelle, bevorzugt einer Druckluftquelle, verbindbar ist. An den Medienanschluss 25 schließt im Inneren des Laserhandgriffs 1 eine Leitung an, die das Fluid bis zum Kopfstück 2A, 2B leitet, von wo es zur Kühlung der Präparationsstelle über eine oder mehrere Öffnungen abgegeben wird.

Bevorzugt wird das Fluid vor der Abgabe auf die Präparationsstelle mit einem zweiten Fluid, zum Beispiel Wasser, in einer Mischkammer des Laserhandgriffs 1 vermischt. Das zweite Fluid tritt über einen weiteren Medienanschluss 24, der ebenfalls eine Eintrittsöffnung und eine Bohrung umfasst und über das zweite Kupplungselement 15 mit einer Fluidquelle, bevorzugt einem Wasseranschluss, verbindbar ist, in den Laserhandgriff 1 ein und wird in einer getrennten Leitung durch den Laserhandgriff 1 bis zur Mischkammer geführt.

Alternativ ist es auch möglich, nur das Wasser vom Medienanschluss 24 bis zu den Abgabeöffnungen im Kopfstück 2A, 2B zu leiten und auf die Präparationsstelle abzugeben und die durch den Medienanschluss 25 geleitete Druckluft mittels einer Leitung oder durch Abgabe in den Innenraum der Außenhülse 11 zur Kühlung der Laserlichtquelle zu verwenden.

Seitlich des Medienanschlusses 25 bzw. in Umfangsrichtung der Stirnfläche 26 ist jeweils ein Medienanschluss 22, 23 angeordnet, der elektrische Kontakte, zum Beispiel metallische Buchsen oder Stifte, aufweist. Von diesen beiden Medienanschlüssen 22, 23 erstrecken sich elektrische Leitungen zu den elektrischen Verbrauchern im Laserhandgriff 1, insbesondere zur Laserlichtquelle, zur Steuerung, zu den Stell- oder Steuerelementen 18A - 18E und gegebenenfalls zu einem Kühlkörper für die Laserlichtquelle 59.

Unterhalb dieser drei im Wesentlichen auf einer Linie oder nebeneinander angeordneten Medienanschlüsse 22, 23, 25 sind zwei weitere Medienanschlüsse 20, 21 paarig nebeneinander auf der Stirnfläche 26 vorgesehen. Beide Medienanschlüsse 20, 21 umfassen jeweils eine Eintrittsöffnung und eine Bohrung. Der Medienanschluss 21 mit dem geringeren Durchmesser ist wiederum über das zweite Kupplungselement 15 mit einer Fluidquelle, bevorzugt einer Druckluftquelle, verbindbar, so dass Druckluft in den Laserhandgriff 1 förderbar ist, die zum Kühlen der Laserlichtquelle verwendet wird. Die Druckluft tritt dabei aus der Bohrung des ersten Kupplungselements 14 direkt in den Innenraum der Außenhülse 11 aus. Die nach dem Durch- oder Umströmen der Laserlichtquelle und / oder eines Kühlkörpers erwärmte Druckluft wird in der Außenhülse 11 geleitet und durch den Medienanschluss 20 wieder in die Versorgungsleitung 19 zurückgeführt.

Wie bereits erwähnt ist das Anschlussbild des ersten Kupplungselements 14, d.h. die räumliche Anordnung der Medienanschlüsse 20-25, auf das Anschlussbild des zweiten Kupplungselements 15 der Versorgungsleitung 19 abgestimmt, so dass die beiden Kupplungselemente 14, 15 miteinander verbindbar, insbesondere zusammensteckbar, sind. Das Anschlussbild des zweiten Kupplungselements 15 gleicht somit dem in Figur 4 dargestellten Anschlussbild, wobei die einzelnen Medienanschlüsse, zum Beispiel in Form von Medienleitungen 16 oder elektrischen Kontakten, seitenverkehrt angeordnet sind.

Der in Figur 3 dargestellte Laserhandgriff 3 gleicht im Wesentlichen dem Handgriff 1, so dass im Folgenden primär die Unterschiede beschrieben sind. Der Laserhandgriff 3 weist eine hohlzylindrische Außenhülse 31 auf, an deren einem Ende sich eine ebenfalls zylindrische Anschlussvorrichtung 33 mit einem ersten Kupplungselement 34 befindet. Über das erste Kupplungselement 34 ist der Laserhandgriff 3 mit einem Versorgungsschlauch einer dentalen Behandlungseinheit verbindbar, so dass der Laserhandgriff 3 mit den von der dentalen Behandlungseinheit zur Verfügung gestellten Medien betreibbar ist.

An der Stirnfläche 37 des ersten Kupplungselements 34 sind fünf Medienanschlüsse 40-44 sowie ein Verschlusselement 45 vorgesehen, wobei im Vergleich zum Laserhandgriff 1 aus Figur 1 die Medienanschlüsse 40-44 anders am ersten Kupplungselement 34 angeordnet sind. Die beiden paarig, in der Mitte der Stirnfläche 37 angeordneten Medienanschlüsse 40, 41 umfassen jeweils einen kurzen, über die Stirnfläche 37 hinausragenden Rohrabschnitt und eine das erste Kupplungselement 34 durchsetzende Bohrung. Der Medienanschluss 41 mit dem geringeren Durchmesser ist über das zweite Kupplungselement der Versorgungsleitung mit einer Fluidquelle, bevorzugt einer Druckluftquelle, verbindbar, so dass Druckluft in den Laserhandgriff 3 förderbar ist, die zum Kühlen der Laserlichtquelle verwendet wird. Die Druckluft tritt dabei aus der Bohrung des ersten Kupplungselements 34 direkt in den Innenraum der Außenhülse 31 aus. Die nach dem Durch- oder Umströmen der Laserlichtquelle und / oder eines Kühlkörpers erwärmte Druckluft wird in der Außenhülse 31 und durch den Medienanschluss 40 geleitet und wieder in die Versorgungsleitung zurückgeführt.

An einer ersten Seite 35 der Medienanschlüsse 40, 41 sind ebenfalls paarig zwei weitere Medienanschlüsse 42, 43 vorgesehen, die als elektrische Kontakte ausgebildet sind und zwei Stifte sowie das erste Kupplungselement 34 durchsetzende Leitungen umfasst. Die Leitungen sind mit einem oder mehreren elektrischen Verbrauchern im Laserhandgriff 3, insbesondere mit der Laserlichtquelle, verbunden.

An einer zweiten Seite 36 des Fluidmedienanschlusspaars 40, 41, die der ersten Seite 35 gegenüber liegt, befinden sich eine weiterer Medienanschluss 44 sowie ein Verschlusselement 45. Alternativ ist es möglich, anstelle des Verschlusselements 45 einen weiteren Medienanschluss vorzusehen, so dass auch auf der zweiten Seite 36 ein Medienanschlusspaar vorliegt. Der Medienanschluss 44 umfasst eine Eintrittsöffnung und eine Bohrung und ist über das zweite Kupplungselement der Versorgungsleitung mit einer Fluidquelle, bevorzugt einem Wasseranschluss, verbindbar. An den Medienanschluss 44 schließt im Inneren des Laserhandgriffs 3 eine Leitung an, die das Fluid bis in die Nähe der Laserlichtabgabeöffnung leitet, von wo es zur Kühlung der Präparationsstelle über eine oder mehrere Öffnungen abgegeben wird. Ist anstelle des Verschlusselements 45 ein weiterer Medienanschluss vorhanden, so ist dieser bevorzugt mit einer weiteren Fluidquelle, insbesondere Druckluft, verbindbar, so dass wie weiter oben für den Laserhandgriff 1 und die beiden Medienanschlüsse 24, 25 beschrieben, in einer Mischkammer ein Luft-Wasser-Spray-Gemisch herstellbar und auf die Präparationsstelle abgebbar ist.

Das Verschlusselement 45 umfasst einen zylindrischen Stift, der in eine Öffnung oder Bohrung des an der Versorgungsleitung angeordneten zweiten Kupplungselements einsetzbar ist. Bevorzugt sind am Verschlusselement 45 Dichtelemente vorgesehen, die die Öffnung des zweiten Kupplungselements zusätzlich abdichten.

Gleich wie für den Laserhandgriff 1 gemäß Figur 1 beschrieben ist das Anschlussbild des ersten Kupplungselements 34, d.h. die räumliche Anordnung der Medienanschlüsse 40-44 und des Verschlusselements 45, auf das Anschlussbild des zweiten Kupplungselements der Versorgungsleitung abgestimmt, so dass die beiden Kupplungselemente miteinander verbindbar, insbesondere zusammensteckbar, sind. Das Anschlussbild des zweiten Kupplungselements gleicht somit dem in Figur 3 dargestellten Anschlussbild, wobei die einzelnen Medienanschlüsse, zum Beispiel in Form von Medienleitungen, Bohrungen, Öffnungen oder elektrischen Kontakten, seiten- oder spiegelverkehrt angeordnet sind.

Der in Figur 5 dargestellte Laserhandgriff 5 gleicht in seinem Aufbau den beiden bereits beschriebenen Laserhandgriffen 1, 3. Er weist eine längliche, zylindrische Außenhülse 51 mit einem Innenraum oder Hohlraum 52 auf, in dem die Laserlichtquelle 59, zum Beispiel eine Laserdiode sowie weitere Bauelement, zum Beispiel die Steuervorrichtung, die Beleuchtungsvorrichtung, Medienleitung für die Sprayflüssigkeit usw. aufgenommen sind. An einem Ende der Außenhülse 51 befindet sich die Anschlussvorrichtung 53 mit dem ersten Kupplungselement 54 zum lösbaren Anschluss des Laserhandgriffs 5 an die Versorgungsleitung der dentalen Behandlungseinheit, so dass der Laserhandgriff 5 wiederum mit den von der dentalen Behandlungseinheit zur Verfügung gestellten Medien betreibbar ist.

Das erste Kupplungselement 54 des Laserhandgriffs 5 umfasst wiederum zwei als elektrische Kontakte ausgebildete Medienanschlüsse zur Versorgung der Laserlichtquelle 59 (aufgrund der gewählten Schnittebene durch den Laserhandgriff 5 sind diese nicht dargestellt) sowie zwei paarig angeordnete Medienanschlüsse 60, 61. Die Medienanschlüsse 60, 61 umfassen jeweils einen kurzen, über die Stirnfläche 57 hinausragenden Rohrabschnitt und eine das erste Kupplungselement 54 durchsetzende Bohrung. Der Medienanschluss 61 mit dem geringeren Durchmesser ist über das zweite Kupplungselement der Versorgungsleitung mit einer Fluidquelle, bevorzugt einer Druckluftquelle, verbindbar, so dass Druckluft in den Laserhandgriff 5 förderbar ist, die zum Kühlen der Laserlichtquelle 59 verwendet wird. Die Druckluft tritt dabei aus der Bohrung bzw. aus dem Rohrabschnitt des ersten Kupplungselements 54 in eine im Innenraum der Außenhülse 51 angeordnete und mit der Bohrung verbundene Luftleitung 56 über. Durch eine oder mehrere Öffnungen 58 tritt die Druckluft aus der Luftleitung 56 aus und wird auf den Kühlkörper 55 gelenkt, so dass die Druckluft diesen umströmt, Wärme vom Kühlkörper 55 aufnimmt und diese konvektiv vom Kühlkörper 55 und aus dem Laserhandgriff 5 abführt. Dazu wird die erwärmte Druckluft in der Außenhülse 51 zurück zum Medienanschluss 60 geleitet und durch diesen in die Versorgungsleitung oder an die Umgebung abgegeben.

Der Kühlkörper 55 gemäß Figur 5 umfasst einen Wärme leitenden Metallkörper, zum Beispiel ein Metallblech, und / oder einen Kühlkörper, in dessen Inneren eine verdampfbare Flüssigkeit enthalten ist (ein so genanntes Wärmerohr oder heat pipe). Der Kühlkörper 55 ist mit der Laserlichtquelle 59 verbunden, wobei er bevorzugt an einem Ende eine Befestigungs- oder Verbindungsvorrichtung 55A für die Laserlichtquelle 59 aufweist. Die Befestigungs- oder Verbindungsvorrichtung 55A ist insbesondere als gegenüber dem übrigen Kühlkörper verbreiterte Plattform ausgebildet. Auf der Befestigungs- oder Verbindungsvorrichtung 55A sind die Laserlichtquelle 59, bevorzugt die Laserlichtquelle 59 und zumindest Teile der elektrischen oder elektronischen Komponenten zur Transformierung von Stromparametern des von der dentalen Behandlungseinheit zur Verfügung gestellten Stroms, zum Beispiel Kondensatoren, SMD-Widerstände oder ein Mikrocontroller, besonders bevorzugt zusätzlich auch zumindest Teile der Steuervorrichtung des Laserhandgriffs 5 angeordnet.

Die Laserlichtquelle 59 ist bevorzugt derart im Laserhandgriff 5, insbesondere auf der Befestigungs- oder Verbindungsvorrichtung 55A, angeordnet, dass zumindest ein wesentlicher Teil der von ihr abgebbaren Strahlung von der Anschlussvorrichtung 53 weg bzw. in Richtung der Lichtabgabeöffnung des Laserhandgriffs 5 emittierbar ist. Dazu weist zumindest eine der Lichtabgabeflächen der Laserlichtquelle 59, bei Vorhandensein mehrerer Lichtabgabeflächen bevorzugt die flächenmäßig größte Lichtabgabefläche, in Richtung der Lichtabgabeöffnung. Die Laserlichtquelle 59 strahlt somit einen wesentlichen Teil der von ihr emittierbaren Strahlung entlang oder parallel zur Längsachse 62 des Laserhandgriffs 5 ab.

Die Erfindung ist nicht auf die beschriebenen Ausführungsbeispiele beschränkt, sondern umfasst alle Laserhandgriffe, Laserbehandlungsvorrichtungen oder dentale Behandlungseinheiten die das prinzipielle, sinngemäße Funktionsprinzip der Erfindung anwenden oder beinhalten.

## Patentansprüche

1. Dentaler Laserhandgriff (1, 3, 5) umfassend eine Außenhülse (11, 31, 51) mit einem Hohlraum (52), eine in dem Hohlraum (52) angeordnete Laserlichtquelle (59), die insbesondere eine Laserdiode aufweist, eine Lichtabgabevorrichtung (12A, 12B) zur Abgabe des von der Laserlichtquelle (59) erzeugten Laserlichts in Richtung der Präparationsstelle und eine Anschlussvorrichtung (13, 33, 53) zur Verbindung des Laserhandgriffs (1, 3, 5) mit einer Versorgungsleitung (19), **dadurch gekennzeichnet, dass**
die Anschlussvorrichtung (13, 33, 53) ein erstes Kupplungselement (14, 34, 54) aufweist, das zumindest drei Medienanschlüsse (20-25, 40-44, 60, 61) umfasst, die derart am ersten Kupplungselement (14, 34, 54) angeordnet sind, dass das erste Kupplungselement (14, 34, 54) lösbar mit einem zweiten Kupplungselement (15) der Versorgungsleitung (19) verbindbar ist, das zum Anschluss an ein dentales Handinstrument ohne Laserlichtquelle vorgesehen ist.

2. Dentaler Laserhandgriff (1, 3, 5) nach Anspruch 1, **dadurch gekennzeichnet, dass** das erste Kupplungselement (14, 34, 54) zumindest vier Medienanschlüsse aufweist, wobei zwei Medienanschlüsse (22, 23; 42, 43) als elektrische Leiter zur Stromversorgung der Laserlichtquelle (59) ausgebildet sind, ein Medienanschluss (21, 41, 61) zum Leiten eines Fluids in den Laserhandgriff (1, 3, 5) über das zweite Kupplungselement (15) mit einer Fluidquelle verbindbar ist und ein Medienanschluss (20, 40, 60) zum Leiten eines Fluids aus dem Laserhandgriff (1, 3, 5) vorgesehen ist.

3. Dentaler Laserhandgriff (1, 3, 5) nach Anspruch 2, **dadurch gekennzeichnet, dass** der mit der Fluidquelle verbindbare Medienanschluss (21, 41, 61) einen geringeren Durchmesser aufweist als der Medienanschluss (20, 40, 60) zum Leiten des Fluids aus dem Laserhandgriff (1, 3, 5), dass diese beiden Fluidmedienanschlüsse (20, 21; 40, 41; 60, 61) paarig nebeneinander am ersten Kupplungselement (14, 34, 54) angeordnet sind und dass die beiden als elektrische Leiter (22, 23; 42, 43) ausgebildeten Medienanschlüsse ebenfalls paarig angeordnet an einer ersten Seite (35) des Fluidmedienanschlusspaars (20, 21; 40, 41; 60, 61) vorgesehen sind.

4. Dentaler Laserhandgriff (1, 3, 5) nach Anspruch 3, **dadurch gekennzeichnet, dass** an einer zweiten Seite (36) des Fluidmedienanschlusspaars (40, 41), die der ersten Seite (35) gegenüber liegt, zumindest eine weiterer Medienanschluss (44) vorgesehen ist, bevorzugt zwei paarig angeordnete Medienanschlüsse vorgesehen sind.

5. Dentaler Laserhandgriff (1, 3, 5) nach Anspruch 1, **dadurch gekennzeichnet, dass** das erste Kupplungselement (14, 34, 54) umfasst zwei als elektrische Leiter ausgebildete Medienanschlüsse (22, 23, 42, 43), zumindest einen Medienanschluss (21, 25, 41, 61), der über das zweite Kupplungselement (15) mit einer Druckgasquelle verbindbar ist, und zumindest einen Medienanschluss (44), der über das zweite Kupplungselement (15) mit einer Wasserquelle verbindbar ist.

6. Dentaler Laserhandgriff (1, 3, 5) nach einem der vorhergehenden Ansprüche, **dadurch gekennzeichnet, dass**
das erste Kupplungselement (14, 34, 54) zumindest ein Verschlusselement (45) zum Verschließen oder Abdichten einer am zweiten Kupplungselement (15) vorgesehenen Medienleitung (16) aufweist.

7. Dentaler Laserhandgriff (1, 3, 5) nach einem der vorhergehenden Ansprüche, **dadurch gekennzeichnet, dass**
das erste Kupplungselement (14, 34, 54) zumindest zwei weitere Medienanschlüsse aufweist, die als elektrische Leiter ausgebildet sind und die mit einem weiteren elektrischen Verbraucher verbunden sind, zum Beispiel einer Steuervorrichtung, einem Kühlelement, einer Anzeigevorrichtung (17) oder eine Beleuchtungseinrichtung zur Abgabe von sichtbarem Licht.

8. Dentaler Laserhandgriff (1, 3, 5) nach einem der vorhergehenden Ansprüche, **dadurch gekennzeichnet, dass**
das erste Kupplungselement (14, 34, 54) als Teil einer Steckkupplung ausgebildet ist.

9. Dentaler Laserhandgriff (1, 3, 5) nach einem der vorhergehenden Ansprüche, **dadurch gekennzeichnet, dass**
zwischen der Laserlichtquelle (59) und der Anschlussvorrichtung (13, 33, 53) zumindest ein Kühlelement (55) zum Kühlen der Laserlichtquelle (59) vorgesehen ist, wobei das Kühlelement (55) durch ein Fluid um- und / oder durchströmbar ist, das durch einen Medienanschluss (21, 24, 25, 41, 44, 61) des ersten Kupplungselements (14, 34, 54) in den Laserhandgriff (1, 3, 5) förderbar ist.

10. Dentaler Laserhandgriff (1, 3, 5) nach einem der vorhergehenden Ansprüche,
**dadurch gekennzeichnet, dass**
im Hohlraum (52) der Außenhülse (11, 31, 51) eine Steuervorrichtung vorgesehen ist, die mit zumindest einem Steuer- oder Stellelement (18A - 18E) an der Außenhülse (11, 31, 51) und mit der Laserlichtquelle (59) verbunden ist, so dass Betriebsparameter der Laserlichtquelle (59) einstellbar oder Betriebsprogramme der Laserlichtquelle (59) auswählbar sind.

11. Dentale Behandlungseinheit (10) umfassend einen Behandlungsstuhl (9), zumindest einen Anschluss an eine Medienquelle, eine Versorgungsleitung (19), die mit dem zumindest einen Anschluss an die Medienquelle verbunden ist und die ein zweites Kupplungselement (15) zum Anschluss eines dentalen Handinstruments aufweist, **gekennzeichnet durch**
einen dentalen Laserhandgriff (1, 3, 5) nach einem der vorhergehenden Ansprüche.
